# EUROPEAN PATENT SPECIFICATION

(11) **EP 2 047 581 B1**
(45) Date of publication and mention of the grant of the patent: **11.01.2017**
(21) Application number: 07787761.1
(22) Date of filing: 20.07.2007
(51) Int. Cl.: H02K 1/22, H02K 1/27, H02K 21/46

(54) **METHOD OF MANUFACTURING A LINE START PERMANENT MAGNET ELECTRIC MOTOR**
HERSTELLUNGSVERFAHREN EINES SELBSTANLAUFENDEN PERMANENTMAGNETMOTORS
PROCÉDÉ DE FABRICATION D'UN MOTEUR À AIMANT PERMANENT À DÉMARRAGE DIRECT

(30) Priority: 25.07.2006 TR 200603878
(43) Date of publication of application: 15.04.2009
(73) Proprietor: Arçelik Anonim Sirketi, 34950 Istanbul (TR)
(72) Inventor: ALBAS CIRPANLI, Gunsu, 34950 Istanbul (TR); AYVAZOGLU, Cumhur, 34950 Istanbul (TR); DIRIL, Orhan, 34950 Istanbul (TR); BIROL SERTCELIK, Feriha, 34950 Istanbul (TR)
(86) International application number: PCT/EP2007/057507
(87) International publication number: WO 2008/012270

(56) References cited:
- EP-A- 1 519 471
- JP-A- 6 098 510
- JP-A- 6 153 469
- JP-A- 8 009 604
- JP-A- 2001 095 183
- US-A1- 2004 256 939

## Description

The present invention relates to a line start permanent magnet motor that operates asynchronously at the start-up and synchronously after start up.

Particularly in implementations wherein high start up moment and high operational efficiency is important, for example in compressors of cooling devices, hybrid type electric motors having asynchronous motor properties at the start, and synchronous motor features in continuous operation are utilized. Hybrid type electric motors are generally called "line start permanent magnet motor". In the rotor of the hybrid type electric motor, in addition to the magnetic cage (squirrel cage) structure, formed with rotor bars having conductive and easily-shaped properties such as aluminum in the rotor slots and the end-rings that mechanically and electrically join these rotor bar ends on both surfaces of the rotor, permanent magnets are utilized that are emplaced inside the rotor. The hybrid motor starts asynchronously by means of the magnetic cage at the rotor and operates synchronously after start up by means of the permanent magnets placed in the rotor. The problem that arises in producing this type of rotors is reaching high temperatures while injecting aluminum material into the rotor slots and the magnets embedded into the rotor losing their magnetic properties due to high temperatures. In order to solve this problem, the magnets can be placed in the rotor after the aluminum injection process however another problem, the displacement of the magnets placed later on, is encountered. In order to place the magnets after the injection process, the shape of particularly the end ring is changed depending on the layout arrangement of the magnets and the shape variations in the end rings results in magnetic flux irregularities and disruptions in the rotor balance.

In the European patent application no. EP1519471, a permanent magnet synchronous motor is described which comprises a stator, a rotor and permanent magnets. The rotor comprises a rotor iron core, a plurality of conductor bars accommodated within corresponding slots in the rotor iron core and a starter squirrel cage conductor formed of a plurality of short-circuit rings positioned at axially opposite ends of the rotor iron core. Furthermore, the rotor includes magnet retaining slots on the inner sides of the conductor bars close to the periphery of the rotor and the permanent magnets are inserted in these magnet retaining slots. End plates made of a non-magnetizable material is positioned between one or two faces of the rotor so as to prevent dislocation of magnets during operation. Shaping the short circuit rings depending on the magnet layout arrangement and making the cross-section thinner at some places result in the increase of electrical resistance and balance problems arise. Furthermore, a separate path has to be opened in the rotor core to inject the aluminum that acts as a rivet in order to fix the end plates in the production of this type of rotor.

In the United States of America patent application no. US2004256939, the rotor of a line start permanent magnet motor and a manufacturing method thereof is described. A supporting plate is not used at the side wherein magnets are inserted for preventing displacement of magnets embedded into the rotor core during operation but instead the end ring is formed so as to cover the magnet slots and the end ring is provided with magnet paths thereon sized for passing through the permanent magnets. After the injection process of end rings and the conductor bars on the rotor core is completed, the magnets are passed through the magnet paths to be embedded into the rotor core and afterwards fixing members are mounted on the magnet paths for preventing the magnets from being separated. The magnet paths make the production of end rings more difficult, provide a barrier for the magnetic flux and increase electrical resistance.

In the Japanese patent documents no. JP6098510 and JP8009604, the end rings and the conductor bars are manufactured separately from the rotor core and are mounted on the rotor core later on. The end rings and the conductor bars are pressed to be joined together. This method can be used in rotors wherein the skew angle is zero degrees, that is, it can be used for rotor slots and conductor bars that are vertical to the plane of the end ring.

In the Japanese patent document no. JP6153469, the skew angle is different from zero degrees in order to increase the operational efficiency. In other words, the rotor slots are inclined with respect to the axis of the shaft hole at the center of the rotor core. In this implementation, the conductor bars and the end rings are produced separately from the rotor core and after the conductor bars are mounted on the rotor core one by one, the end parts of the conductor bars projecting out of the rotor core are connected with the end rings by means of friction welding. When a skew angle different from zero degrees is applied at the rotors, the rotor slots are inclined in accordance with the skew angle and also become helical in shape matching the cylindrical configuration of the rotor core. The conductor bars that are produced elsewhere can only be placed with gaps into the inclined and helical shaped rotor slots thus increasing the rotor resistance.

The aim of the present invention is the realization of a line start permanent magnet motor of which the start-up and operational efficiency is enhanced, comprising a low cost rotor with a simplified manufacturing process.

The aim of the present invention is solved by the method of manufacturing electric motor comprising the features of claim 1.

Further embodiments of the method according to claim 1 are defined in the appended claims.

In the electric motor of the present invention, the conductor bars in the rotor core that provide high start-up moment are formed by injecting aluminum into the rotor slots, the fixing ends are formed in the injection mould by shaping the portions of the conductor bars that go out from the injection first and/or second surfaces of the rotor core. The magnets are arranged in the magnet inserting holes disposed in the rotor core after the injection process so that the magnets are not affected by the high temperature.

At least one of the end rings that connect the conductor bar ends on both ends of the rotor core forming the squirrel cage structure is produced separately and mounted on the rotor core after the process of arranging the magnets. The (modular) end rings mounted later on have an inner diameter dimension that prevents the magnets from displacement by covering over the magnet inserting holes. The modular end rings include fixing end housings into which the fixing ends are inserted.

The fixing ends of the conductors bars that extend out of the core are mounted in the fixing end housings in the end rings by press-fitting and the end rings that are mounted later on are secured to the core without the requirement of an additional support element. The fixing ends are crushed in the fixing end housings during assembly by press-fitting thus enhancing electric conductivity.

In another embodiment of the present invention, an electrically conductive adhesive is applied between the fixing ends and the fixing end housings on the end rings thus enhancing electrical conductivity besides fixing the conductor bars to the end rings.

In another embodiment of the present invention, the fixing ends and the corresponding fixing end housings facing opposite thereof have a stepped configuration with a narrowing cross-section in the direction of assembly. The step in the form of an extension formed at the end portion of the fixing end is fitted into the step formed as a recess or hole in the fixing end housing thereby enforcing the assembly.

In another embodiment of the present invention, the fixing ends project out from the fixing end housings and the projected portions of the fixing ends are crushed, providing riveting.

In another embodiment of the present invention, one of the end rings is produced by injecting into the rotor core together with the conductor bars, the other end ring is produced separately and mounted on the rotor core after the processes of aluminum injection and securing of the magnets.

Particularly the rotor slots having a skew angle not equal to zero can be filled with conductor bars without any gaps by producing the conductor bars separately from at least one of the end rings by the aluminum injection process, thus providing advantage over implementations wherein conductor bars are produced elsewhere and mounted on the rotor core. The magnets can be inserted into the magnet inserting holes after the high temperature generating aluminum injection process by producing at least one of the end rings modularly without the injection process and the magnet inserting holes can be covered by the modular end ring preventing the displacement of the magnets.

The electric motor of the present invention is used in implementations wherein start-up moment and operational efficiency is important such as compressors of cooling devices.

The electric motor realized in order to attain the aim of the present invention is illustrated in the attached figures, where:

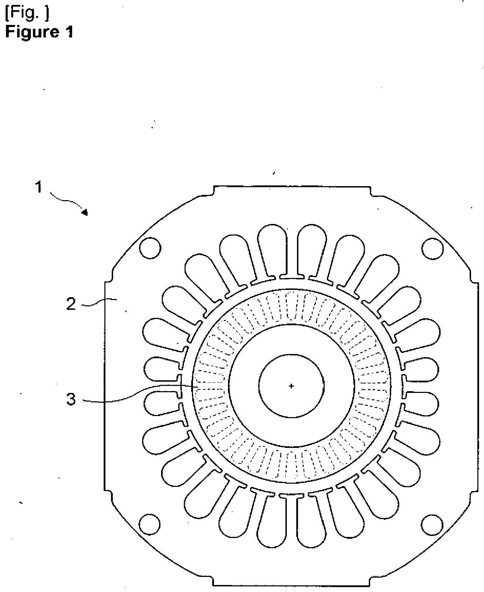

Figure 1 - is the schematic view of an electric motor.

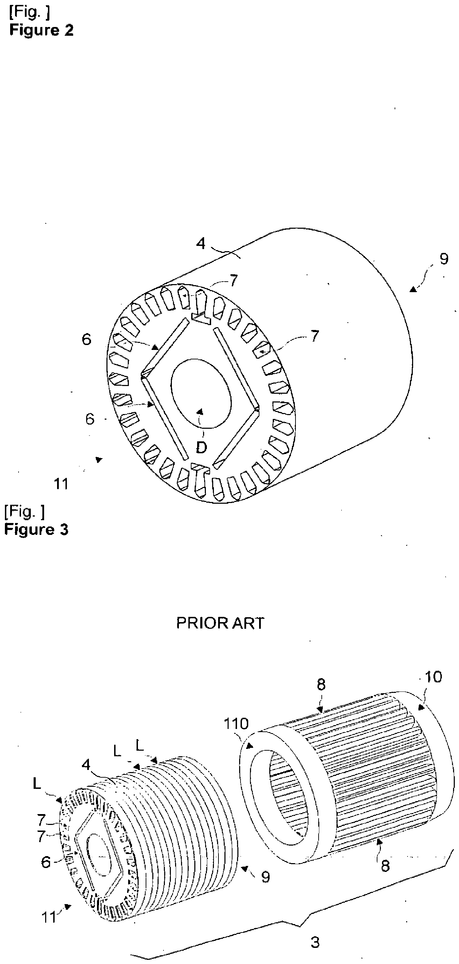

Figure 2 - is the perspective view of a rotor core.
Figure 3 - is the perspective view of a state of the art rotor core and a squirrel cage structure formed of end rings and conductor bars.
Figure 4 - is the perspective view of a rotor wherein conductor bars are injected into the rotor slots, the magnets and the modular end rings.
Figure 5 - is the perspective view of a rotor, wherein the end ring is injected together with the conductor bars on one surface and the other end ring is modular.
Figure 6 - is the schematic view of a rotor with a modular end ring fixed to one surface thereof.

The elements illustrated in the figures are numbered as follows:
- 1.: Electric motor
- 2.: Stator
- 3.: Rotor
- 4.: Core
- 5.: Magnet
- 6.: Magnet inserting hole
- 7.: Rotor slot
- 8.: Conductor bar
- 9.: First surface
- 10.: , 110. End ring
- 11.: Second surface
- 12.: Fixing end
- 13.: Fixing end housing

The line start permanent magnet motor (1) comprises a stator (2) and a rotor (3).

The rotor (3) comprises a core (4) of cylindrical configuration with a shaft hole (D) at the center, formed of magnetic steel rotor laminations (L) stacked on top of each other, one or more magnets (5) disposed by being embedded into the core (4) in the axial direction, providing synchronous operation, one or more magnet inserting holes (6) disposed around the shaft hole (D) wherein the magnets (5) are embedded, more than one rotor slots (7) at a region near the outer periphery of the core (4), extending in the axial direction such that the skew angle is zero or different from zero, in the same direction as the shaft hole (D) axis of the core (4) or in a sloped direction with respect to the shaft hole (D) axis, more than one conductor bars (8) formed by injecting aluminum into the rotor slots (7) in the injection mould (K), a first surface (9) situated at the aluminum injected side of the core (4), a first end ring (10) providing the connection of the conductor bar (8) ends at the first surface (9) with each other, a second surface (11) situated at the side wherein the injected aluminum goes out of the core (4) and a second end ring (110) providing the connection of the conductor bar (8) ends on the second surface (11).

During the production of the rotor (3), the core (4) is formed by stacking the rotor laminations (L) on top of each other, with the shaft hole (D), rotor slots (7) and magnet inserting holes (6) provided thereon and aluminum is injected from the first surface (9) by emplacing the core (4) in the aluminum injection mould (K). While aluminum is injected into the core (4) from the first surface (9), the penetration of aluminum into the magnet inserting holes (6) and the shaft hole (D) is prevented by various methods. The magnets (5) are arranged in the magnet inserting holes (6) after the aluminum injection process and thus the magnets (5) are prevented from being affected by high temperatures.

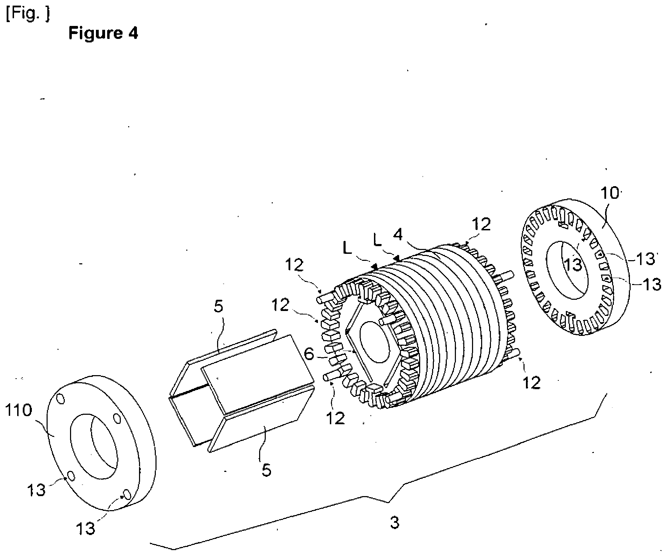

The rotor (3) of the present invention comprises more than one fixing ends (12) formed in the injection mould (K) by shaping the ends of the conductor bars (8) injected into the rotor slots (7) projecting out of the first and/or second surfaces (9, 11) and end rings (10, 110) with at least one produced separately (modular) and mounted on the first and/or second surfaces (9, 11) after the processes of injection of the conductor bars (8) and securing of the magnets (5), dimensioned such that the magnet inserting holes (6) are partially or entirely covered and having more than one fixing end housings (13) wherein the fixing ends (12) are fitted (Figure 4).

During the production of the rotor (3), the core (4) is formed by stacking the rotor laminations (L) on top of each other, with the shaft hole (D), rotor slots (7) and magnet inserting holes (6) provided thereon. Aluminum is injected from the first surface (9) into the rotor slots (7) and the conductor bars (8) are formed, while preventing penetration of aluminum into the magnet inserting holes (6). The fixing ends (12) are formed with the injection mould (K) by shaping the portions of the conductor bars (8) that project from the first and/or second surfaces (9, 11). After the magnets (5) are inserted into the magnet inserting holes (6), the first and/or the second end ring (10, 110) produced modularly elsewhere is mounted on the first and/or second surfaces (9, 11) by fitting the fixing ends (12) into the fixing end housings (13). The modularly produced end rings (10, 110) dimensioned to partially or entirely cover over the magnet inserting holes (6) preventing the displacement of the magnets (5).

In an embodiment of the present invention, the fixing ends (12) are fitted into the fixing end housings (13) by press-fitting and the end rings (10, 110) are fixed to the core (4) without requiring an additional support element. Electric conductivity is enhanced by crushing the fixing ends (12) inside the fixing end housings (13).

In another embodiment of the present invention, an electrically conductive adhesive is applied between the fixing ends (12) and the fixing end housings (13) on the end rings (10, 110) thus enhancing electrical conductivity as well as fixing the conductor bars (8) to the end rings (10, 110).

In another embodiment of the present invention, at least one fixing end (12) and the corresponding fixing end housing (13) have a stepped configuration with a narrowing cross-section in the direction of assembly. The step in the form of an extension formed at the end portion of the fixing end (12) is fitted into the step formed as a recess or hole in the continuance of the fixing end housing (13) thereby enforcing the assembly.

In another embodiment of the present invention, the fixing end (12) projects out from the fixing end housing (13) and the projected part of the fixing end (12) is crushed to provide riveting.

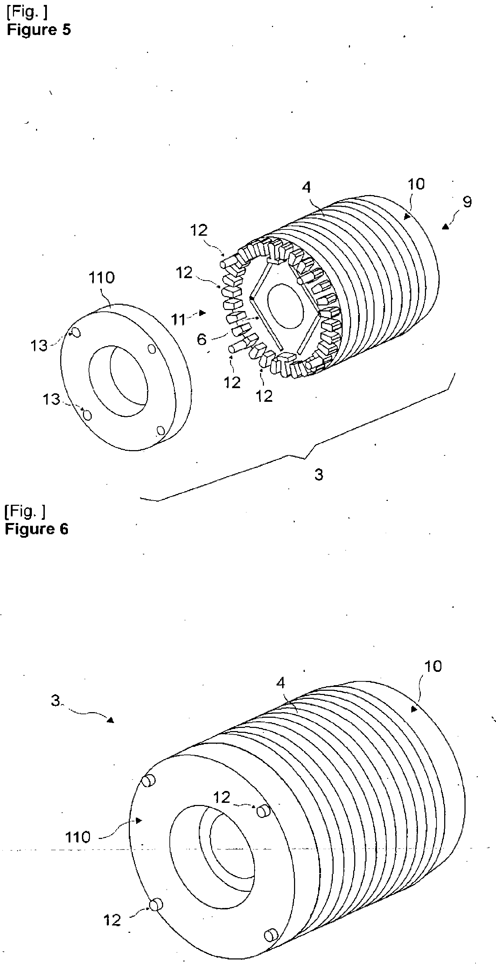

In another embodiment of the present invention, the first end ring (10) is produced together with the conductor bars (8) by injecting on the first surface (9) and the second end ring (110) is produced separately (modularly) and fitted into the fixing ends (12) at the second surface (11) by means of the fixing end housings (13) thereon, after the processes of aluminum injection and securing of magnets (5) in the magnet inserting holes (6) (Figures 5, 6).

Particularly the helically configured rotor slots (7) having a skew angle not equal to zero can be filled with conductor bars (8) without any gaps by producing the conductor bars (8) separately from at least one of the end rings (10, 110) by the aluminum injection process, thus providing advantage over implementations wherein conductor bars (8) are produced elsewhere and mounted on the core (4). The magnets (5) can be secured in the magnet inserting holes (6) after the high temperature generating aluminum injection process by producing at least one of the end rings (10, 110) modularly and the magnet inserting holes (6) can be covered by the modular end ring (10, 110) thus preventing the displacement of the magnets.

## Claims

1. A method of manufacturing electric motor (1) comprising
- forming a rotor (3) having a core (4) by stacking rotor laminations (L), said core having more than one motor slots (7),
- embedding one or more magnets (5) into the core (4) at one or more magnet inserting holes (6) for securing the magnets (5),
- injecting aluminum into the rotor slots (7) in an injection mould (K) to form more than one conductor bars (8) and to define a first surface (9) situated at the aluminum injected side of the core (4) and a second surface (11) situated at the side wherein the injected aluminum goes out of the core (4),
wherein a first end ring (10) is provided for the electrical connection of the conductor bar (8) ends with each other at the first surface (9) and a second end ring (110) is provided for the electrical connection of the conductor bar (8) ends on the second surface (11),
said method being **characterized**
- **by** forming more than one fixing end (12) by shaping the ends of the conductor bars (8) injected into the rotor slots (7), said fixing end (12) projecting out of the first and/or second surfaces (9, 11)
- and by producing end rings (10, 110) with at least one produced separately and mounting same on the first and/or second surfaces (9, 11) after the processes of securing of the magnets (5), said end rings (10, 110) dimensioned such that the magnet inserting holes (6) are partially or entirely covered and fitting the fixing ends (12) in more than one fixing end housing (13) included in the end rings (10, 110).

2. A method of manufacturing electric motor (1) as in Claim 1, **characterized by** fitting the fixing ends (12) into the fixing end housings (13) by press-fitting.

3. A method of manufacturing electric motor (1) as in Claim 1, **characterized by** applying an electrically conductive adhesive between the fixing end housings (13) and fixing ends (12).

4. A method of manufacturing electric motor (1) as in Claim 1 or 2, **characterized by** providing the at least one fixing end (12) with a stepped configuration with a narrowing cross-section in the direction of assembly and by providing a corresponding fixing end housing (13) with a stepped configuration.

5. A method of manufacturing electric motor (1) as in Claim 2 or 4, **characterized by** providing the fixing end (12) projecting out of the fixing end housing (13) and by crushing the projected portion thereof to provide riveting.

6. A method of manufacturing electric motor (1) as in any one of the above claims, **characterized by** producing a first end ring (10) together with the conductor bars (8) by injecting on the first surface (9) and producing separately a second end ring (110) and mounting same into the fixing ends (12) at the second surface (11) after the processes of aluminum injection and securing of magnets (5) in the magnet inserting holes (6).

## Patentansprüche

1. Verfahren zum Herstellen eines Elektromotors (1), umfassend
- Bilden eines Rotors (3) mit einem Kern (4) durch Stapeln von Rotorlaminierungen (L), wobei der Kern mehrere Motorschlitze (7) aufweist,
- Einbetten von einem oder mehreren Magneten (5) in den Kern (4) an einer oder mehreren Magneteinführbohrungen (6) zum Sichern der Magnete (5),
- Einspritzen von Aluminium in die Rotorschlitze (7) in einer Spritzform (K), um mehrere Zuführungsschienen (8) zu bilden und eine erste Fläche (9), die an der Aluminiumeinspritzseite des Kerns (4) angeordnet wird, und eine zweite Fläche (11) zu definieren, die an der Seite angeordnet wird, an der das eingespritzte Aluminium den Kern (4) verlässt,
wobei ein erster Endring (10) für die elektrische Verbindung der Enden der Zuführungsschiene (8) miteinander an der ersten Fläche (9) bereitgestellt wird und ein zweiter Endring (110) für die elektrische Verbindung der Enden der Zuführungsschiene (8) miteinander an der zweiten Fläche (11) bereitgestellt wird, wobei das Verfahren **gekennzeichnet ist durch**
- Bilden mehrerer Fixierungsenden (12) **durch** Formen der Enden der Zuführungsschienen (8), die in die Rotorschlitze (7) eingespritzt wurden, wobei die Fixierungsende (12) aus der ersten und/oder zweiten Fläche (9, 11) herausragen
- und Herstellen mehrerer Endringe (10, 110), wobei wenigstens einer separat hergestellt wird, und Anbringen derselben an der ersten und/oder zweiten Fläche (9, 11) nach den Vorgängen des Sicherns der Magnete (5), wobei die Endringe (10, 110) derart abgemessen werden, dass die Magneteinführbohrungen (6) teilweise oder ganz abdeckt werden, und Einsetzen der Fixierungsendes (12) in mehrere Fixierungsendgehäuse (13), die in den Endringen (10, 110) enthalten sind.

2. Verfahren zum Herstellen eines Elektromotors (1) nach Anspruch 1, **gekennzeichnet durch** Einsetzen der Fixierungsenden (12) in die Fixierungsendgehäuse (13) **durch** Presspassung.

3. Verfahren zum Herstellen eines Elektromotors (1) nach Anspruch 1, **gekennzeichnet durch** Auftragen eines elektrisch leitenden Klebstoffs zwischen den Fixierungsendgehäusen (13) und den Fixierungsenden (12).

4. Verfahren zum Herstellen eines Elektromotors (1) nach Anspruch 1 oder 2, **gekennzeichnet durch** Versehen des wenigstens einen Fixierungsendes (12) mit einer gestuften Ausgestaltung mit einem schmaler werdenden Querschnitt in der Montagerichtung und Versehen eines entsprechenden Fixierungsendgehäuses (13) mit einer gestuften Ausgestaltung.

5. Verfahren zum Herstellen eines Elektromotors (1) nach Anspruch 2 oder 4, **gekennzeichnet durch** Bereitstellen des Fixierungsendes (12) derart, dass es aus dem Fixierungsendgehäuse (13) ragt, und **durch** Quetschen des herausragenden Abschnitts desselben, wodurch eine Vernietung bereitgestellt wird.

6. Verfahren zum Herstellen eines Elektromotors (1) nach einem der vorangehenden Ansprüche, **gekennzeichnet durch** Herstellen eines ersten Endrings (10) zusammen mit den Zuführungsschienen (8) **durch** Einspritzen an der ersten Fläche (9) und separates Herstellen eines zweiten Endrings (110) und Anbringen desselben in den Fixierungsenden (12) an der zweiten Fläche (11) nach den Vorgängen des Aluminiumeinspritzens und des Sicherns von Magneten (5) in den Magneteinführbohrungen (6).

## Revendications

1. Un procédé de fabrication d'un moteur électrique (1) comprenant
- former un rotor (3) présentant un noyau (4) par l'empilage des feuilletages de rotor (L), ledit noyau présentant plus d'une fente de moteur (7),
- encastrer un ou plusieurs aimants (5) dans le noyau (4) à un ou plusieurs trous d'insertion d'aimant (6) pour fixer les aimants (5),
- injecter de l'aluminium dans les fentes de rotor (7) dans un moule d'injection (K) pour former plus d'une barre conductrice (8) et pour définir une première surface (9) située au côté injecté d'aluminium du noyau (4) et une deuxième surface (11) située au côté où l'aluminium injecté sort du noyau (4),
où un premier anneau d'extrémité (10) est disposé pour la connexion électrique des extrémités de la barre conductrice (8) l'une avec l'autre à la première surface (9) et un deuxième anneau d'extrémité (110) est disposé pour la connexion électrique des extrémités de la barre conductrice (8) l'une avec l'autre sur la deuxième surface (11) ledit procédé étant **caractérisé**
- **par** former plus d'une extrémité de fixation (12) en formant les extrémités des barres conductrices (8) injectées dans les fentes de rotor (7), ladite extrémité de fixation (12) faisant saillie hors de la première et/ou deuxième surface (9, 11)
- et produire les anneaux d'extrémité (10, 110) avec au moins un produit séparément et monter le même sur la première et/ou deuxième surface (9, 11) après les processus de fixation des aimants (5), lesdits anneaux d'extrémité (10, 110) dimensionnés de telle sorte que les trous d'insertion d'aimant (6) sont partiellement ou entièrement couverts, et faire rentrer les extrémités de fixation (12) dans plus d'un logement d'extrémité de fixation (13) inclus dans les anneaux d'extrémité (10, 110).

2. Un procédé de fabrication d'un moteur électrique (1) selon la Revendication 1, **caractérisé par** faire rentrer les extrémités de fixation (12) dans les logements d'extrémité de fixation (13) par l'ajustement à la presse.

3. Un procédé de fabrication d'un moteur électrique (1) selon la Revendication 1, **caractérisé par** applique un adhésif conducteur entre les logements d'extrémité de fixation (13) et les extrémités de fixation (12).

4. Un procédé de fabrication d'un moteur électrique (1) selon la Revendication 1 ou 2, **caractérisé par** doter l'au moins une extrémité de fixation (12) d'une configuration étagée présentant une section rétrécie dans la direction d'assemblage et par doter un logement d'extrémité de fixation correspondant (13) d'une configuration étagée.

5. Un procédé de fabrication d'un moteur électrique (1) selon la Revendication 2 ou 4, **caractérisé par** former l'extrémité de fixation (12) faisant saillie hors du logement d'extrémité de fixation (13) et par écraser la partie en saillie de celle-là pour le rivetage.

6. Un procédé de fabrication d'un moteur électrique (1) selon l'une quelconque des revendications précédentes, **caractérisé par** produire un premier anneau d'extrémité (10) avec les barres conductrices (8) en injectant sur la première surface (9) et produire séparément un deuxième anneau d'extrémité (110) et monter le même dans les extrémités de fixation (12) à la deuxième surface (11) après les processus d'injection de l'aluminium et de fixation des aimants (5) dans les trous d'insertion d'aimant (6).
